(19) Europäisches Patentamt / European Patent Office / Office européen des brevets

(11) **EP 2 466 338 B1**

(12) **FASCICULE DE BREVET EUROPEEN**

(45) Date de publication et mention de la délivrance du brevet:
**23.09.2020 Bulletin 2020/39**

(51) Int Cl.:
***G01V 11/00*** *(2006.01)*     ***E21B 43/00*** *(2006.01)*

(21) Numéro de dépôt: **11290555.9**

(22) Date de dépôt: **02.12.2011**

(54) **Procédé d'exploitation d'un gisement pétrolier à partir d'un modèle d'écoulement calé au moyen d'une mise à l'échelle de cartes de pression et de saturation**

Ausbeutungsverfahren eines Erdöllagers auf der Grundlage eines stabilen Abflussmodells mittels einer skalengetreuen Normierung der Druck- und Sättigungskarten

Method for exploiting an oil deposit based on a flow model defined by setting pressure and saturation maps to scale

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.12.2010 FR 1004890**

(43) Date de publication de la demande:
**20.06.2012 Bulletin 2012/25**

(73) Titulaire: **IFP Energies nouvelles**
**92500 Rueil-Malmaison (FR)**

(72) Inventeur: **Enchery, Guillaume**
**92500 Rueil-Malmaison (FR)**

(74) Mandataire: **IFP Energies nouvelles**
**Département Propriété Industrielle**
**Rond Point de l'échangeur de Solaize**
**BP3**
**69360 Solaize (FR)**

(56) Documents cités:
**EP-A1- 1 728 967**

- ENCHERY G. ET AL: "An Improved Pressure and Saturation Downscaling Process for a Better Integration of 4D Seismic Data Together with Production History", SPE, vol. SPE, no. 107088, 11 juin 2007 (2007-06-11), pages 1-7, XP007918941,
- ROGGERO F ET AL: "Matching of Production History and 4D Seismic Data - Application to the Girassol Field, Offshore Angola", SPE INTERNATIONAL OIL AND GAS CONFERENCE AND EXHIBITION, 11 novembre 2007 (2007-11-11), pages 1-20, XP002568892,
- LE RAVALEC-DUPIN, M. ET AL: "Pre-selection of Reservoir Models From a Geostatistics-based Petrophysical Seismic Inversion", SPE 131310, vol. SPE, 131310, 14 juin 2010 (2010-06-14), pages 1-12, XP007918942,
- G. ENCHERY (IFP), F. ROGGERO (IFP), M. LE RAVALEC (IFP), E. TILLIER (IFP) & V.GERVAIS (IFP): "A New Parameterization Technique for the Calibration of Facies Proportions in History matching Processes", ECMOR, vol. ECMOR XII, no. B009, 6 septembre 2010 (2010-09-06), pages 1-13, XP007918943,
- LERAT O ET AL: "Construction of a Stochastic Geological Model Constrained by High-Resolution 3D Seismic Data - Application to the Girassol Field Offshore Angola", SPE INTERNATIONAL OIL AND GAS CONFERENCE AND EXHIBITION, 11 novembre 2007 (2007-11-11), pages 1-16, XP002568891,

**Description**

La présente invention concerne le domaine technique de l'industrie pétrolière, et plus particulièrement l'exploitation de réservoirs souterrains, tels que des réservoirs pétroliers ou des sites de stockage de gaz.

En particulier, l'invention permet de modifier une représentation du réservoir, appelée modèle de réservoir, pour la rendre cohérente avec les différentes données collectées sur le terrain.

Dans la présente description, on désigne par "upscaling", la mise à l'échelle des propriétés associées à une première grille pour les adapter à une seconde grille dont la résolution est inférieure à celle de la première grille (il s'agît du changement d'échelle d'une échelle fine vers une échelle grossière). A l'inverse, on désigne par "downscaling", la mise à l'échelle des propriétés associées à une première grille pour les adapter à une seconde grille dont la résolution est supérieure à celle de la première grille (il s'agît du changement d'échelle d'une échelle grossière vers une échelle fine).

L'optimisation et l'exploitation des gisements pétroliers reposent sur une description aussi précise que possible de la structure, des propriétés pétrophysiques, des propriétés des fluides, etc., du gisement étudié. Pour ce faire, les spécialistes utilisent un outil qui permet de rendre compte de ces aspects de façon approchée : le modèle de réservoir. Un tel modèle constitue une maquette du sous-sol, représentative à la fois de sa structure et de son comportement. Généralement, ce type de maquette est représenté sur un ordinateur, et l'on parle alors de modèle numérique. Un modèle de réservoir comporte une grille (ou maillage), généralement tridimensionnelle, associée à une ou plusieurs cartes de propriétés pétrophysiques (porosité, perméabilité, saturation...). L'association consiste à attribuer des valeurs de ces propriétés pétrophysiques à chacune des mailles de la grille.

Ces modèles bien connus et largement utilisés dans l'industrie pétrolière, permettent de déterminer de nombreux paramètres techniques relatifs à l'étude ou l'exploitation d'un réservoir, d'hydrocarbures par exemple. En effet, puisque le modèle de réservoir est représentatif de la structure du réservoir et de son comportement, l'ingénieur l'utilise par exemple pour déterminer les zones qui ont le plus de chances de contenir des hydrocarbures, les zones dans lesquelles il peut être intéressant/nécessaire de forer un puits d'injection ou de production pour améliorer la récupération des hydrocarbures, le type d'outils à utiliser, les propriétés des fluides utilisés et récupérés.... Ces interprétations de modèles de réservoir en termes de « paramètres techniques d'exploitation » sont bien connues des spécialistes. De la même façon, la modélisation des sites de stockages de $CO_2$ permet de surveiller ces sites, de détecter des comportements anormaux et de prédire le déplacement du $CO_2$ injecté.

Un modèle de réservoir a donc pour vocation de rendre compte, au mieux, de toutes les informations connues sur un réservoir. Un modèle de réservoir est représentatif lorsqu'une simulation de réservoir pour ce modèle fournit des estimations de données d'historique très proches des données observées. On appelle données d'historique, les données de production issues de mesures aux puits en réponse à la production du réservoir (production d'huile, production d'eau d'un ou plusieurs puits, ratio gaz/huile (GOR), proportion d'eau de production ("water cut"), et/ou les données de sismiques répétitives (impédances sismiques 4D dans une ou plusieurs régions, etc.). Une simulation de réservoir est une technique permettant de simuler les écoulements de fluides au sein d'un réservoir au moyen d'un logiciel appelé simulateur d'écoulement, et du modèle de réservoir.

Pour ce faire, l'intégration de toutes les données disponibles est indispensable. Ces données comprennent en général :

- des mesures en certains points de la formation géologique, par exemple dans des puits. Ces données sont dites statiques car elles sont invariables dans le temps (à l'échelle des temps de la production du réservoir).

- des "données d'historique", comprenant des données de production, par exemple les débits de fluide mesurés aux puits, les concentrations de traceurs et des données issues de campagnes d'acquisition sismique répétées à des temps successifs. Ces données sont dites dynamiques car elles évoluent en cours d'exploitation et sont indirectement liées aux propriétés attribuées aux mailles du modèle de réservoir.

Les techniques d'intégration des données dynamiques (production et/ou sismique 4D) dans un modèle de réservoir sont bien connues des spécialistes : ce sont des techniques dites de "calage d'historique" ("history-matching" en anglais).

Le calage d'historique consiste à modifier les paramètres d'un modèle de réservoir, tels que les perméabilités, les porosités ou les skins de puits (représentant les endommagements autour du puits), les connections de failles... pour minimiser les écarts entre les données d'historique simulées et mesurées. Les paramètres peuvent être liés à des régions géographiques comme les perméabilités ou porosités autour d'un puits ou plusieurs puits. L'écart entre données réelles et données simulées forme une fonctionnelle, dite fonction objectif. Le problème du calage d'historique se résout en minimisant cette fonctionnelle.

La boucle d'optimisation se déroule de la façon suivante. Les propriétés pétrophysiques (lithofaciès, porosités, perméabilités...) sont générées sur une première grille et l'ensemble de ces données constitue le modèle géologique du réservoir. Comme la grille géologique peut être relativement fine, on effectue une mise à l'échelle ("upscaling" en anglais) de ces propriétés sur une grille plus grossière, dite grille d'écoulement, afin de diminuer les temps de calculs lors de la simulation. L'historique de production est ensuite simulé sur cette grille. Cette simulation permet de calculer des données de production aux puits mais aussi des cartes de pressions, saturations d'eau, d'huile et de gaz à différentes dates. Lorsque des données de sismique 4D sont disponibles, ces cartes sont transmises à un modèle pétro-élastique qui calcule les attributs sismiques du modèle. Ces attributs sismiques et données de production simulés sont ensuite comparés aux données mesurées via la fonction objectif.

La grille utilisée par le modèle pétro-élastique peut avoir une résolution plus fine que la grille d'écoulement, voire être identique à celle du modèle géologique. Une mise à l'échelle des cartes de pressions et de saturations de la grille d'écoulement vers la grille sismique est alors nécessaire. Cette étape est appelée downscaling. Si la grille d'écoulement a été construite en agglomérant les mailles du modèle pétro-élastique, une façon simple de réaliser ce downscaling consiste à attribuer les pressions et les saturations d'une maille de la grille d'écoulement sur les mailles fines sous-jacentes. Mais ce procédé est peu précis en pratique car il ne tient pas compte des hétérogénéités sous-jacentes au sein d'une maille grossière. Or les variations spatiales de la pression et la distribution des saturations dépendent fortement des porosités, perméabilités absolues et relatives présentes à l'échelle fine. Si l'on ne tient pas compte de ces hétérogénéités, le calcul des attributs sismiques devient moins précis car les impédances sont elles-mêmes sensibles aux variations de pressions et de saturations. Le downscaling des pressions et des saturations vise donc à calculer des attributs sismiques plus représentatifs du modèle géologique et de réduire l'erreur introduite par l'upscaling.

On connaît des techniques permettant de réaliser ce downscaling des pressions et des saturations. Un état de l'art et une nouvelle technique sont présentés dans le document suivant :

- S. A. Castro, A Probabilistic Approach To Jointly Integrate 3D/4D Seismic, Production Data and Geological Information for Building Reservoir Models, PhD thesis, Stanford University, 2007

Ce document présente deux techniques n'utilisant que des données statiques (porosités, perméabilités absolues, proportions d'argile...) pour améliorer le downscaling des saturations et propose aussi une solution basée sur des simulations d'écoulement locales. Dans les paragraphes suivants nous présentons brièvement chacune de ces techniques.

Une première solution consiste à recalculer une distribution des saturations dans chaque maille grossière en utilisant les porosités présentes à l'échelle fine, *i.e.* :

$$S(u) = S(v)\phi(u)/\overline{\phi(v)} \qquad \forall u \subset v$$

Dans l'équation précédente, *u* désigne une maille fine incluse dans une maille grossière *v,* S une des trois saturations, $\phi$ la porosité, $\overline{\phi(v)}$ la moyenne arithmétique de la porosité sur la maille *v.*

Dans

- M. Sengupta, Integrating rock physics and flow simulation to reduce uncertainties in seismic reservoir monitoring, PhD thesis, Stanford University, 2000

un downscaling 1D des saturations est fait le long des puits en utilisant des données fournies par les logs (porosités, perméabilités, volumes d'argiles...). Ce downscaling permet ensuite de calculer des variations d'amplitudes plus précises au niveau des puits.

Les deux algorithmes mentionnés précédemment sont purement statiques et n'utilisent pas des données telles que les pressions et les saturations à l'état initial, les perméabilités relatives... Castro a proposé un autre algorithme de downscaling des saturations basé sur des simulations d'écoulement locales. La reconstruction est faite en itérant sur les mailles grossières tout en suivant le sens de l'écoulement et en utilisant comme conditions aux limites les saturations calculées en amont.

On connait également les documents :

- ENCHERY G. et al.: "An improved pressure and saturation downscaling process for a better intégration of 4D seismic data together with production history", SPE, vol. SPE., no. 107088, 11 juin 2007,
  qui divulgue un procédé de détermination de la pression et de la saturation à une échelle fine pour une intégration dans un procédé pour optimiser l'exploitation d'un milieu souterrain. Ce document prévoit notamment la détermination de la saturation dans chaque zone identifiée par une méthode itérative vérifiant une inégalité.
- EP 1 728 967 A1, qui décrit une méthode pour prédire la production d'un réservoir souterrain par la mise à jour d'un modèle géologique contraint par des données sismiques et des données de production. En particulier, ce document divulgue une méthode de « downscaling » se basant sur un simple « mapping » pour transcrire les saturations et pressions du maillage grossier de la simulation d'écoulement au maillage fin du modèle géologique ;

- ROGGERO F. et al. : Matching of production history and 4D seismic data - application to the Girassol Field, Offshore Angola" SPE INTERNATIONAL OIL AND GAS CONFERENCE AND EXHIBITION, 11 novembre 2007,

qui décrit une méthode pour coupler des données mesurées aux données simulées concernant l'historique de production et la sismique, cette méthode pouvant être utilisée dans un procédé pour l'exploitation d'un milieu souterrain. En particulier, ce document divulgue une méthode de « downscaling » se basant sur un simple « mapping » pour transcrire les saturations et pressions du maillage grossier de la simulation d'écoulement au maillage fin du modèle géologique.

Ainsi, l'objet de l'invention concerne un procédé alternatif pour optimiser l'exploitation d'un milieu souterrain, à partir d'un modèle géologique. Le procédé comporte un calage d'historique de ce modèle sur des données dynamiques, en utilisant, pour le calage des données sismiques, une reconstitution sur la grille fine des champs de pressions et de saturations. Une équation en pression est résolue localement sur la grille fine, les saturations sont, elles, calculées, au niveau de chaque maille grossière, en écrivant la continuité des flux des phases entre lithofaciès voisins, la conservation du volume poreux et la conservation du volume des phases.

**Le procédé selon l'invention**

De façon générale, l'invention concerne un procédé selon la revendication 1.

Selon l'invention, le premier système d'équations ne peut faire intervenir que des perméabilités relatives des fluides dans chacune des zones identifiées ($R_n$). Il peut s'obtenir en écrivant l'équation suivante pour chaque zone connexe n :

$$\frac{kr_{\alpha1,Rn}\left(S_{\alpha1,Rn}\right)}{kr_{\alpha1,Rn}\left(S_{\alpha1,Rn}\right)+kr_{\alpha2,Rn}\left(S_{\alpha2,Rn}\right)} = \frac{kr_{\alpha1,Rn+1}\left(S_{\alpha1,Rn+1}\right)}{kr_{\alpha1,Rn+1}\left(S_{\alpha1,Rn+1}\right)+kr_{\alpha2,Rn+1}\left(S_{\alpha2,Rn+1}\right)}$$

Avec :

$kr_{\alpha,Rn}$ : perméabilité relative de la phase fluide a

$S_{\alpha,Rn}$ saturation de la phase fluide a dans une zone identifiée $R_n$

Concernant le second système d'équations il peut s'écrire de la façon suivante :

$$\begin{cases} \left(S_{\alpha1,R1}\sum_{i\subset I,i\subset R1}Vol_i.\phi_{f,i}\right)+...+\left(S_{\alpha1,Rn}\sum_{i\subset I,i\subset Rn}Vol_i.\phi_{f,i}\right)=S_{\alpha1,I}.Vol_I.\phi_{c,I} \\ ... \\ \left(S_{\alpha p,R1}\sum_{i\subset I,i\subset R1}Vol_i.\phi_{f,i}\right)+...+\left(S_{\alpha p,Rn}\sum_{i\subset I,i\subset Rn}Vol_i.\phi_{f,i}\right)=S_{\alpha p,I}.Vol_I.\phi_{c,I} \\ \sum_p S_{\alpha p,R1} = 1 \\ ... \\ \sum_p S_{\alpha p,Rn} = 1 \end{cases}$$

avec :

$\alpha1, ...\alpha p$ : fluides 1 à p

$R1, ...Rn$ : zones identifiées 1 à n

$i$ : maille de ladite seconde grille incluse dans une maille / de ladite première grille

$Vol_i$ : volume d'une maille i de ladite seconde grille

$Vol_I$ : volume d'une maille I de ladite première grille

$\Phi_{f,i}$ : porosité d'une maille i de ladite seconde grille

$\Phi_{c,l}$ :     porosité d'une maille l de ladite première grille

$S_{\alpha,R}$     saturation de la fluide $\alpha$ dans une zone identifiée R

$S_{\alpha,l}$     saturation de la fluide $\alpha$ dans la maille l, calculée par ladite simulation d'écoulement.

Pour attribuer une valeur de pression en chaque maille de la seconde grille, on peut réaliser les étapes suivantes :

- on partitionne ladite première grille en un ensemble de sous-domaines connexes ;
- on résout, pour chacun des sous-domaines, une équation de conservation du volume total des fluides dans les mailles de ladite seconde grille incluse dans le sous-domaine.

Dans ce cas, on peut utiliser l'équation de conservation suivante :

$$div\left(K_f\left(n_w + n_o + n_g\right)_{f,c} \nabla P\right) = 0$$

sur $\Omega_{loc}$

$$P = P_{B_{loc}}$$

**sur** $B_{loc}$

Avec :

- $K_f$ : perméabilité définie sur la seconde grille

- $\eta_{\alpha,f,c}$ : mobilité d'une fluide a

- $P_{B_{loc}}$ : pression sur une frontière $B_{loc}$ du sous-domaine $\Omega_{loc}$.

Selon un mode de réalisation, si la porosité d'une maille de la seconde grille est inférieure à un premier seuil fixé, on n'attribue aucune valeur de pression à cette maille, et des flux avec des mailles voisines sont considérés comme nuls ; et si la perméabilité d'une maille de la seconde grille est inférieure à un second seuil fixé, on attribue à cette maille une valeur de pression égale à une pression avant l'exploitation du milieu, et des flux avec des mailles voisines sont considérés comme nuls.

Enfin, selon un mode de réalisation, si la porosité d'une zone identifiée est inférieure à un premier seuil fixé, on n'attribue aucune valeur de saturation à cette zone; et si la perméabilité d'une zone identifiée est inférieure à un second seuil fixé, on attribue à cette zone une valeur de saturation égale à une saturation avant l'exploitation du milieu.

D'autres caractéristiques et avantages du procédé selon l'invention, apparaîtront à la lecture de la description ci-après d'exemples non limitatifs de réalisations, en se référant aux figures annexées et décrites ci-après.

**Présentation succincte des figures**

• La figure 1 illustre le procédé d'exploitation d'un gisement pétrolier selon l'invention.

• La figure 2 montre, sur une coupe verticale 2D, un exemple de partition du maillage géologique en sous-domaines avant l'étape de downscaling des cartes de pressions.

• La figure 3 montre une maille de la grille d'écoulement, le maillage fin sous-jacent en pointillés et le lithofaciès associé à chaque maille fine (sur cet exemple, deux lithofaciès sont présents et représentés par des cellules de couleur blanche ou grise).

• La figure 4 montre la carte en lithofaciès de l'exemple d'application ainsi que la position des puits injecteur (I) et producteur (P).

• La figure 5 donne la valeur des impédances initiales (en $g.cm^{-3}.m.s^{-1}$) de type P (ondes de compression) calculées en simulant l'écoulement directement sur la grille fine.

- La figure 6 donne les différences d'impédances (en $g.cm^{-3}.m.s^{-1}$) de type P à 3000 jours par rapport aux valeurs initiales. Ces valeurs ont été calculées en simulant l'écoulement directement sur la grille fine.

- La figure 7 montre les impédances initiales (en $g.cm^{-3}.m.s^{-1}$) que l'on obtient en effectuant un upscaling des propriétés pétrophysiques et un downscaling des cartes de pressions et de saturations où l'on attribue simplement les valeurs d'une maille grossière aux mailles fines sous-jacentes.

- La figure 8 montre les variations d'impédances (en $g.cm^{-3}.m.s^{-1}$) à 3000 jours que l'on obtient par rapport à l'instant initial en effectuant un upscaling des propriétés pétrophysiques et un downscaling des cartes de pressions et de saturations où l'on attribue simplement les valeurs d'une maille grossière aux mailles fines sous-jacentes.

- La figure 9 montre les impédances initiales (en $g.cm^{-3}.m.s^{-1}$) que l'on obtient en effectuant un upscaling des propriétés pétrophysiques et un downscaling des cartes de pressions et de saturations avec l'algorithme décrit dans cette invention.

- La figure 10 montre les variations d'impédances (en $g.cm^{-3}.m.s^{-1}$) à 3000 jours que l'on obtient par rapport à l'instant initial en effectuant un upscaling des propriétés pétrophysiques et un downscaling des cartes de pressions et de saturations avec l'algorithme décrit dans cette invention.

## Description détaillée du procédé

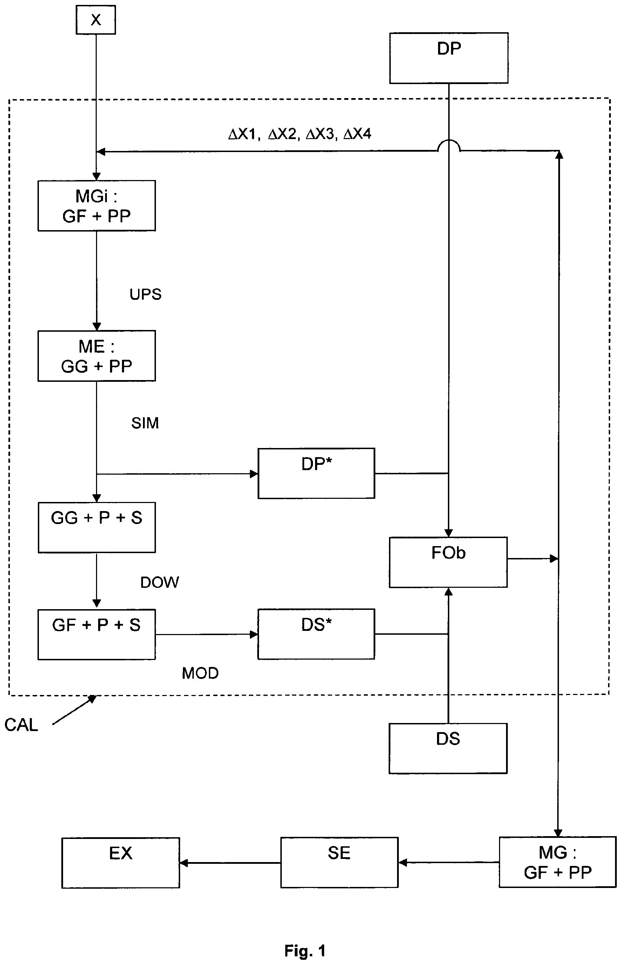

La figure 1 illustre le procédé d'exploitation d'un gisement pétrolier selon l'invention. Le procédé comporte principalement quatre étapes :

1. on génère un premier modèle géologique initial (MGi) à partir d'un ensemble de paramètres (X1) ;

2. on acquiert des données dynamiques (DP, DS) au cours de l'exploitation du gisement, et l'on définit une fonction objectif (FOb) pour le calage d'historique ;

3. on réalise un calage (CAL) d'historique en réalisant les étapes suivantes :

   i. on réalise un upscaling (UPS) des propriétés pétrophysiques (PP) du modèle géologique sur une grille plus grossière (GG); le modèle obtenu est appelé modèle d'écoulement (ME) ; on note (X2) un ensemble de paramètres associés à l'étape d'upscaling ;

   ii. on effectue une simulation d'écoulement (SIM) sur ce modèle ; on note (X3) un ensemble de paramètres associés à la simulation d'écoulement ;

   iii. on réalise un downscaling (DOW) des cartes de pressions (P) et de saturations (S) aux dates où l'on dispose d'enregistrements sismiques ;

   iv. on calcule (MOD) les données sismiques (DS*) correspondants à ces dates en utilisant les cartes obtenues à l'étape précédente et un modèle pétro-élastique (PEM) ; on note (X4) un ensemble de paramètres associés au modèle pétro-élastique ;

   v. les données sismiques (DS*) et les données de production simulées(DP*) sont comparées aux mesures (DS, DP) par l'intermédiaire de la fonction objectif ; un algorithme d'optimisation modifie les ensembles de paramètres (X1), (X2), (X3), (X4) jusqu'à ce que la fonction objectif atteigne un minimum.

4. on exploite (EX) le gisement selon un schéma d'exploitation (SE) adapté au modèle de réservoir (MR) obtenu à l'issue du calage.

Les paramètres de calage, issus des ensembles (X1), (X2), (X3), (X4) sont, en pratique, choisis à l'issue d'une analyse de sensibilité : comme il n'est pas toujours possible de caler tous les paramètres incertains du modèle en même temps, seuls les paramètres les plus influents sur la fonction objectif sont conservés au moment de l'optimisation. Dans ce qui suit nous donnons quelques exemples de paramètres d'inversions pouvant être choisis dans chaque ensemble:

- X1 : proportions de lithofaciès, paramètres locaux ou globaux de déformations graduelles...

- X2 : si une loi puissance est utilisée pour moyenner le champ de perméabilité, l'exposant de cette loi peut être ajusté par calage,

- X3 : skin des puits, saturations d'eau résiduelles utilisées dans les courbes de pressions capillaires ou de perméabilités relatives, multiplicateurs de transmissivités au niveau des failles...

- X4 : les exposants de Hertz, les modules de compressibilité des différents types de roches...

## 1- Génération d'un modèle géologique initial (MGi)

Les formations géologiques sont en général des milieux très hétérogènes. La modélisation d'un gisement souterrain, c'est-à-dire la construction d'une représentation de ce gisement, appelée modèle géologique, nécessite de recourir à des procédés de construction dits « probabilistes » du fait du nombre réduit d'informations disponibles (nombre de puits restreint, ...). La construction d'un modèle géologique dépend tout d'abord de l'environnement du dépôt géologique, ce qui permet de représenter les hétérogénéités majeures qui contrôlent l'écoulement des fluides. L'intégration des données statiques dans ce modèle passe par des opérations linéaires et peut se faire à partir de techniques géostatistiques bien connues des spécialistes.

Un modèle géologique, représenté sur un ordinateur, consiste en une grille à N dimensions (N>0 et en général égale à deux ou trois) dont chacune des mailles se voit affecter une valeur de propriétés caractéristiques de la zone étudiée. Ces propriétés sont appelées propriétés pétrophysiques (PP). Il peut s'agir par exemple de la lithologie, de la porosité, et de la perméabilité. Ces valeurs constituent des cartes. Ainsi un modèle est une grille associée à au moins une carte. La grille d'un modèle géologique est dite "fine" car elle comporte un grand nombre de mailles, de façon à représenter au mieux les hétérogénéités du milieu. Au contraire un modèle d'écoulement est constitué d'une grille dite "grossière", c'est-à-dire une grille comportant des mailles plus grandes et moins nombreuses que celles du modèle géologique.

Une grille fine d'un modèle géologique est notée GF, et une grille grossière d'un modèle d'écoulement est notée GG.

La génération du modèle géologique s'effectue avec des outils de modélisation géostatistique tels que ceux décrits dans les documents suivants :

L.-y. Hu. Graduai déformation and iterative calibration of Gaussian-related Stochastic Models. Mathematical Geology Vol. 32, pp. 87-108, 2000 .

M. Le Ravalec-Dupin, B. Noetinger. Optimization with the Graduai Déformation Method. Mathematical Geology Vol. 34, No. 2, pp. 125-142, 1-2-2002 .

- Matheron G., Beucher H., de Fouquet C., Galli A., Guerillot D., et Ravenne C. 1987: Conditional simulation of the geometry of fluvio deltaic reservoirs. SPE 62nd Annual Conference, Dallas, Texas, pp.591-599 .

Selon un exemple de réalisation on utilise un modèle géostatistique basé sur un champ Gaussien aléatoire pour générer les champs de porosité ($\Phi$), et de densité ($\rho$).

Selon un autre mode de réalisation, il peut être avantageux d'habiller en premier lieu le modèle géologique en lithofaciès, c'est-à-dire le type de roche. En effet, cette description du réservoir en lithofaciès permet de travailler par lithofaciès, c'est-à-dire que l'on peut définir des lois de probabilité, des types de simulation différents par lithofaciès rendant ainsi le modèle plus précis. Pour ce faire, on peut par exemple habiller le maillage du modèle géologique en lithofaciès à l'aide de la méthode des gaussiennes seuillées. Cette méthode a l'avantage d'être compatible avec la technique des déformations graduelles, ce qui permet de rendre la méthode plus performante. Toute autre méthode permettant d'utiliser les déformations graduelles dans la résolution du problème inverse peut également être utilisée de façon avantageuse. L'habillage peut être contraint par un ou plusieurs attributs sismiques de manière directe (techniques de simulations avec dérive externe ou de co-simulations par exemple) ou indirecte (courbes de proportions dérivées d'attributs sismiques).

Ensuite, on peut soit attribuer une valeur constante par lithofaciès pour chaque propriété réservoir, soit effectuer un tirage dans des distributions définies par lithofaciès, ou encore réaliser des co-simulations des variables ($\Phi$, $p$) par lithofaciès. On peut également simuler le volume d'argile $V_{SH}$, soit en attribuant une valeur constante par lithofaciès, soit en effectuant un tirage dans des distributions définies par lithofaciès, selon le modèle pétro élastique utilisé.

Selon un mode de réalisation particulier, on détermine en plus les contacts au sein du réservoir entre l'huile et l'eau (« OWC »), et entre le gaz et l'eau (« GWC »). Ces informations permettent d'affiner les valeurs et/ou les distributions en les rendant dépendantes de la position de la maille par rapport aux contacts. La saturation est dépendante de la position au dessus du contact. Si la zone de transition est franche on passe rapidement de Sw=100% à Sw=Swi, par contre on peut avoir des zones de transition plus progressives.

Dans tous les cas, les propriétés réservoir peuvent être associées au maillage du modèle géologique en générant des nombres aléatoires, puis en appliquant une méthode de simulation. Ainsi un ensemble de nombres aléatoires permet de simuler des valeurs de lithofaciès en toute maille du modèle, et un autre ensemble de nombres aléatoires permet de simuler des valeurs de propriétés réservoir en toute maille du modèle.

Par modifications des paramètres utilisés lors des simulations et de l'optimisation (déformation graduelle par exemple), de nouveaux nombres aléatoires peuvent être générés pour mettre à jour le modèle géologique.

Ainsi, à l'issue de cette étape, l'on dispose d'un modèle géologique fin décrit en propriété pétrophysique (porosité $\Phi$, densité $\rho$, volume d'argile $V_{sh}$ ...). Le modèle peut également être décrit en lithofaciès.

### 2- Acquisition de données dynamiques (DD) et définition d'une fonction objectif

A ce stade, les données dynamiques n'ont pas été considérées pour construire le modèle géologique (MG). On acquiert donc des données dynamiques (DD) au cours de l'exploitation du gisement. Il s'agit de données dont l'une des particularités est de varier au cours du temps en fonction des écoulements des fluides dans le réservoir. Il s'agit généralement des données de sismique 4D (DS) et des données de production (DP), tels que des essais de puits ou de temps de percée. Cette étape est réalisée au moyen d'outils de mesure tels que des débitmètres ou des campagnes sismiques. Les données sismiques (DS) sont représentées sur une grille, dans laquelle chaque maille comporte au moins une valeur d'un attribut sismique.

Ces données dynamiques sont ensuite intégrées dans le modèle géologique par le biais d'une optimisation appelée calage d'historique.

### 3- Calage d'historique (CAL)

Pour réaliser un calage, et ainsi intégrer les données dynamiques (DD) au modèle géologique, on définit une fonction objectif mesurant l'écart entre les données dynamiques mesurées sur le terrain et les réponses correspondantes simulées pour le modèle considéré. Le but du processus d'optimisation est de modifier petit à petit ce modèle pour réduire la fonction objectif.

Cette étape est réalisée au moyen d'un ordinateur sur lequel fonctionne un logiciel technique appelé simulateur d'écoulement, pour simuler les données dynamiques à partir de la représentation du gisement, et d'un autre outil informatique permettant de simuler des données sismiques à partir de la représentation du gisement.

### Upscaling (UPS)

Du fait du nombre important de mailles contenues dans le modèle géologique et de la répétition des simulations d'écoulement au cours d'un calage, le temps de calculs, cumulé au niveau du simulateur, peut être très important. Pour le réduire, les ingénieurs réservoir procèdent à une mise à l'échelle des propriétés pétrophysiques (porosités, perméabilités absolues et relatives) du modèle géologique sur un maillage ayant une résolution plus grossière. Cette étape est appelée "upscaling". Le modèle issu de cet étape est appelé modèle d'écoulement (ME). Ainsi, un modèle d'écoulement, représenté sur un ordinateur, consiste en une grille grossière (GG) à N dimensions (N>0 et en général égale deux ou trois) dont chacune des mailles se voit affecter la valeur d'une propriété caractéristique de la zone étudiée. Il peut s'agir par exemple de la porosité ou de la perméabilité distribuée dans un réservoir (PP). Ces valeurs constituent des cartes. Ainsi un modèle est une grille associée à au moins une carte.

Pour que, localement, le volume poreux dans chacune des mailles de la grille utilisée par le simulateur soit identique à celui donné par le modèle géologique, on calcule la moyenne arithmétique des porosités incluses dans ces mailles.

Par contre, en dehors de cas très particuliers, il n'existe pas de formules générales pour mettre à l'échelle les perméabilités absolues et relatives. Différents algorithmes ont été proposés dans la littérature spécialisée. Les références qui suivent présentent les algorithmes les plus couramment utilisés dans ce domaine:

- pour l'upscaling des perméabilités absolues:

  ◦ L.J. Durlofsky, Upscaling of Geocellular Models for Reservoir Flow Simulation: A Review of Recent Progress, Paper presented at 7th International Forum on Reservoir Simulation, Bühl/Baden-Baden, Germany, June 23-27, 2003

  ◦ Ph. Renard, G. de Marsily, Calculating equivalent permeability: a review, Advances in Water Resources, Vol.

20, Nos 5-6, pp. 253-278, 1997

- pour l'upscaling des perméabilités relatives :
  - J. W. Barker, S. Thibeau, A Critical Review of the Use of Pseudorelative Permeabilities for Upscaling, Paper (SPE 35491) first presented at the 1996 European 3D Reservoir Modelling Conference, Stavanger, 1997

**Simulation d'écoulement** (SIM)

La simulation d'écoulement est réalisée à partir d'un logiciel appelé simulateur d'écoulement. Cet outil est bien connu des spécialistes.

Une telle simulation permet de calculer des données de production (DP*) aux puits, ainsi que des cartes de pressions (P) et de saturations (S) aux dates où ont été réalisés des enregistrements des données sismiques (DS). Ces cartes sont associées à une grille grossière, puisqu'issues du modèle d'écoulement, lui-même constitué d'une grille grossière (GG).

Selon l'invention, ces pressions et saturations sont ensuite utilisées par un modèle pétro-élastique (PEM) pour simuler des données sismiques (DS*), dites synthétiques, aux mêmes dates, permettant ainsi une comparaison du modèle avec les données sismiques acquises.

**Downscaling** (DOW)

Cependant, la résolution des données sismiques est généralement plus fine que celle de la grille d'écoulement. De ce fait, une seconde mise à l'échelle est nécessaire. Cette étape est appelée "downscaling".

Celle-ci consiste à calculer des cartes de pressions (P) et de saturations (S) à la même résolution que la grille des données sismiques à partir des cartes de pressions (P) et de saturations (S) issues du simulateur d'écoulement.

On suppose, pour simplifier la description, que les grilles des données sismiques et du modèle géologique sont identiques, ce qui, en pratique, est souvent vérifié puisqu'une partie de l'information issue de la sismique est utilisée pour construire le modèle géologique initial. On suppose également, que la grille du modèle d'écoulement est construite en agglomérant les mailles du modèle géologique. Le downscaling, dans cette invention, est réalisé au moyen de deux algorithmes différents pour les pressions et les saturations.

Le calcul des **pressions** sur la grille fine est fait en utilisant l'algorithme décrit dans :

- Y. Gautier, M. J. Blunt, M. A. Christie, Nested gridding and streamline-based simulation reservoir performance prédiction, Computational Geosciences, 3, 295-320, 1999.

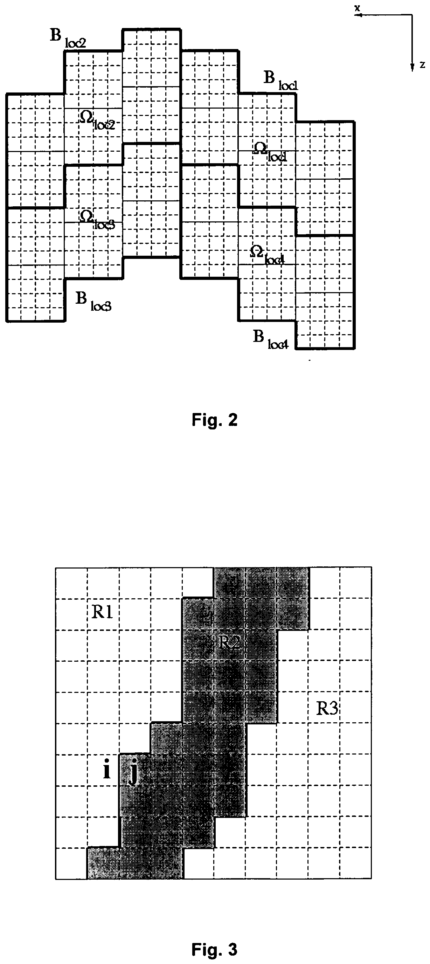

Cet algorithme fonctionne de la façon suivante. La grille d'écoulement est partitionnée en un ensemble de sous-domaines connexes composés de quelques mailles grossières. (voir figure 2). La figure 2 montre, sur une coupe verticale 2D, un exemple de partition du maillage géologique en sous-domaines avant un downscaling des pressions de la grille grossière sur la grille fine. Les mailles de la grille fine sont indiquées en pointillés, celles de la grille d'écoulement en traits pleins. Les limites des sous-domaines sont représentées en traits gras. Dans chacun des sous-domaines, une équation de conservation du volume total de fluide est résolue sur la grille fine sous-jacente :

$$div\left(K_f\left(n_w + n_o + n_g\right)_{f,c} \nabla P\right) = 0$$

sur $\Omega_{loc}$

$$P = P_{B_{loc}}$$

sur $B_{loc}$ Dans l'équation précédente,

- $K_f$ désigne la perméabilité définie sur la grille fine,

- $\eta_{\alpha,f,c}$ la mobilité d'une phase a calculée à partir de la perméabilité relative associée au lithofaciès présent sur la grille fine (indice $f$) et des saturations de la grille grossière (indice $c$),

- $P_{B_{loc}}$ la pression sur la frontière $B_{loc}$ du sous-domaine, obtenue en interpolant les pressions calculées par la simulation d'écoulement.

Pour obtenir cette équation, on suppose que la densité et la viscosité varient peu en fonction de la pression à l'intérieur d'un sous-domaine $\Omega_{loc}$.

Si le sous-domaine contient des perforations liées à la présence de puits, on utilise les débits totaux ou les pressions de fond de puits, fournis par le simulateur, pour calculer les flux entre les perforations et le réservoir.

On appelle maille morte une maille ayant une porosité et/ou une perméabilité inférieure(s) à un certain seuil fixé par l'ingénieur de réservoir. Si la porosité d'une maille fine est trop faible, on considère qu'aucun fluide n'est présent, les pressions et les saturations ne sont pas définies et aucun calcul n'est fait pour cette maille. Les flux avec ses mailles voisines sont considérés comme nuls. Si seule la perméabilité est faible dans une maille, cette maille conserve ces pressions et saturations initiales, c'est-à-dire avant l'exploitation du gisement. Les flux avec ses mailles voisines sont également nuls. Les cartes donnant les pressions et les saturations initiales peuvent être obtenues en effectuant le calcul de l'état initial avec le simulateur, directement sur la grille du modèle géologique. Comme ce calcul ne nécessite aucune itération en temps, cette étape est peu coûteuse en temps de calculs.

L'algorithme de downscaling des **saturations** est décrit ci-après. Le calcul des saturations sur la grille fine se fait ici en itérant sur chacune des mailles de la grille d'écoulement. Dans chaque maille, on suppose que les saturations d'huile et de gaz sont constantes dans des zones connexes de même lithofaciès. Une zone connexe est notée R, et l'on note $R_n$, n=1 à *NbZ,* les *NbZ* zones connexes identifiées. La figure 3 montre, par exemple, une maille grossière et le maillage fin sous-jacent en pointillés. Cette maille contient deux lithofaciès (zones blanches et grisées). Ici la zone $R_1$ a le même lithofaciès que $R_3$ mais n'est pas en contact avec celle-ci du fait de la présence de la zone $R_2$. Dans ce cas, l'algorithme calcule trois triplets de saturations différents pour ces trois zones. L'identification des zones connexes de même lithofaciès ($R_n$), en dimensions N=2,3, se fait en utilisant l'algorithme two-pass décrit dans

- L. Shapiro and G. Stockman, Computer Vision, pp. 69-73, Prentice Hall, 2002.

Une fois l'identification des zones $R_n$ effectuée, on écrit la continuité des flux des phases entre zones voisines. Considérons, par exemple, les deux mailles i et j telles qu'indiquées sur la figure 3. Nous avons :

$$\forall \alpha \in \{w, o, g\}, \ K_i kr_{\alpha,i,R_1}(P_i - P_{ij}) = K_j kr_{\alpha,j,R_2}(P_{ij} - P_j)$$

$kr_\alpha$ désigne ici la perméabilité relative de la phase $\alpha$ (w (eau), o (huile) ou g (gaz)). Dans cette relation, on suppose à nouveau la densité et la viscosité constantes mais aussi que l'influence de la gravité et des pressions capillaires sont négligeables. A partir de ces trois équations (une pour chaque phase), il est possible d'éliminer les pressions P et les perméabilités K. Les manipulations algébriques sont décrites dans le document suivant :

- X-H. Wang, M. Quintard, G. Darche, Adaptive Mesh Refinement for One-dimensional Three-phase Flow with Phase Change in Porous Media, Numerical Heat Transfer, Part B, 50, 231-268, 2006

On aboutit alors à un système (S1) où n'interviennent que les perméabilités relatives de l'huile et du gaz dans chacune des zones ($R_n$) (de façon équivalente, le même système peut être réécrit en fonction des couples eau-huile ou eau-gaz). Dans le cas considéré dans la figure 3, nous avons

$$\begin{cases} \dfrac{kr_{o,R_1}(S_{o,R_1})}{kr_{o,R_1}(S_{o,R_1}) + kr_{g,R_1}(S_{g,R_1})} = \dfrac{kr_{o,R_2}(S_{o,R_2})}{kr_{o,R_2}(S_{o,R_2}) + kr_{g,R_2}(S_{g,R_2})} \\[2em] \dfrac{kr_{g,R_3}(S_{g,R_3})}{kr_{o,R_3}(S_{o,R_3}) + kr_{g,R_3}(S_{g,R_3})} = \dfrac{kr_{g,R_2}(S_{g,R_2})}{kr_{o,R_2}(S_{o,R_2}) + kr_{g,R_2}(S_{g,R_2})} \end{cases}$$

Et de façon générale, avec deux phases $\alpha1$ et $\alpha2$, et pour chaque zone connexe n :

$$\frac{kr_{\alpha1,Rn}(S_{\alpha1,Rn})}{kr_{\alpha1,Rn}(S_{\alpha1,Rn}) + kr_{\alpha2,Rn}(S_{\alpha2,Rn})} = \frac{kr_{\alpha1,Rn+1}(S_{\alpha1,Rn+1})}{kr_{\alpha1,Rn+1}(S_{\alpha1,Rn+1}) + kr_{\alpha2,Rn+1}(S_{\alpha2,Rn+1})}$$

Les courbes de perméabilités relatives, utilisées ici, peuvent être différentes d'une zone à l'autre, si des courbes spécifiques ont été définies pour chaque lithofaciès. Ces courbes par zone connexe sont notées : $kr_{\alpha,Rn}$. Ce premier

système d'équations (S1) n'est pas suffisant pour calculer les saturations des phases dans ces zones. Pour clore le système, on écrit la conservation du volume poreux dans chaque zone ($R_n$) et la conservation du volume de chaque phase dans la maille grossière en utilisant les valeurs calculées par la simulation d'écoulement. Ce deuxième ensemble d'équations est noté (S2).

De façon générale, ce second système d'équations s'écrit :

$$\begin{cases} \left( S_{\alpha 1,R1} \sum_{i \subset I, i \subset R1} Vol_i.\phi_{f,i} \right) + ... + \left( S_{\alpha 1,Rn} \sum_{i \subset I, i \subset Rn} Vol_i.\phi_{f,i} \right) = S_{\alpha 1,I}.Vol_I.\phi_{c,I} \\[2mm] ... \\[2mm] \left( S_{\alpha p,R1} \sum_{i \subset I, i \subset R1} Vol_i.\phi_{f,i} \right) + ... + \left( S_{\alpha p,Rn} \sum_{i \subset I, i \subset Rn} Vol_i.\phi_{f,i} \right) = S_{\alpha p,I}.Vol_I.\phi_{c,I} \\[2mm] \sum_p S_{\alpha p,R1} = 1 \\[2mm] ... \\[2mm] \sum_p S_{\alpha p,Rn} = 1 \end{cases}$$

avec :

$\alpha 1, ...\alpha p$ :  phases 1 à p
R1, ...Rn :  zones connexes 1 à n
$i$ :  maille de ladite seconde grille incluse dans une maille / de ladite première grille
$Vol_i$ :  volume d'une maille i de ladite seconde grille
$Vol_I$ :  volume d'une maille I de ladite première grille
$\Phi_{f,i}$ :  porosité d'une maille i de ladite seconde grille
$\Phi_{c,I}$ :  porosité d'une maille I de ladite première grille
$S_{\alpha,R}$  saturation de la phase $\alpha$ dans une zone connexe R
$S_{\alpha,I}$  saturation de la phase $\alpha$ dans la maille I, calculée par ladite simulation d'écoulement.

Ainsi, dans l'exemple de la figure 3, (S2) s'écrit :

$$\begin{cases} S_{o,R_1} \sum_{i \subset I, i \subset R_1} Vol_i\phi_{f,i} + S_{o,R_2} \sum_{i \subset I, i \subset R_2} Vol_i\phi_{f,i} + S_{o,R_3} \sum_{i \subset I, i \subset R_3} Vol_i\phi_{f,i} = Vol_I\phi_{c,I}S_{o,I} \\[2mm] S_{g,R_1} \sum_{i \subset I, i \subset R_1} Vol_i\phi_{f,i} + S_{g.R_2} \sum_{i \subset I, i \subset R_2} Vol_i\phi_{f,i} + S_{g,R_3} \sum_{i \subset I, i \subset R_3} Vol_i\phi_{f,i} = Vol_I\phi_{c,I}S_{g,I} \\[2mm] S_{w,R_1} = 1 - S_{o,R_1} - S_{g,R_1} \\[1mm] S_{w,R_2} = 1 - S_{o,R_2} - S_{g,R_2} \\[1mm] S_{w,R_3} = 1 - S_{o,R_3} - S_{g,R_3} \end{cases}$$

avec :

- $i$ une maille fine incluse dans une maille $I$,

- $Vol$ le volume de ces mailles,

- $\Phi_{f,i}$ la porosité d'une maille fine i,

- $S_{\alpha,Ri}$ la saturation de la phase a dans une zone $R_n$,

- $S_{\alpha,I}$ la saturation calculée par la simulation d'écoulement.

Au final on résout le système composé des équations (S1) et (S2).

Le traitement des mailles mortes, décrit précédemment pour les pressions, s'applique ici au niveau des zones ($R_n$). Aucun calcul n'est fait pour les zones non poreuses. Les zones poreuses imperméables conservent leurs valeurs initiales et ces valeurs sont utilisées dans les équations (S2) relatives à la conservation des volumes des phases et poreux.

**Modélisation sismique** (MOD)

L'un des objectifs de la méthode selon l'invention est de rendre cohérent le modèle géologique ainsi construit avec les données sismiques. Pour ce faire on résout un problème inverse qui consiste à simuler des données sismiques (DS*) à partir du modèle géologique, via les pressions et saturations ainsi évaluées sur une grille fine.

Pour renseigner la grille du modèle géologique en données sismiques (amplitudes, impédances), on construit un modèle pétro élastique (PEM) correspondant au modèle géologique renseigné. Un exemple de modèle pétro élastique est donné dans :

- S. A. Castro, A Probabilistic Approach To Jointly Integrate 3D/4D Seismic, Production Data and Geological Information for Building Reservoir Models, PhD thesis, Stanford University, 2007

Les cartes de pressions et de saturations permettent, de façon connue des spécialistes, d'évaluer les densités et les modules de compressibilité des fluides. Puis, à partir des densités et modules de compressibilité, on calcule les vitesses des ondes de compression (onde P) et de cisaillement (onde S).

Ainsi, à l'issue de cette étape, on dispose d'un modèle géologique décrit en termes de données sismiques (amplitudes, impédances sismiques) simulées.

Les données sismiques ainsi simulées doivent alors être comparées aux données sismiques observées.

**Optimisation**

Pour réaliser le calage, et ainsi intégrer les données dynamiques (DD) au modèle géologique, on définit une fonction objectif (FOb) mesurant l'écart entre les données dynamiques mesurées sur le terrain et les réponses correspondantes simulées pour le modèle considéré. Le but du processus d'optimisation est de modifier petit à petit ce modèle pour réduire la fonction objectif.

La fonction objectif comprend classiquement un terme mesurant la différence entre les données de production simulées et observées (DP*-DP) et un terme mesurant la différence entre les données sismiques simulées et observées (DS*-DS). On peut par exemple utiliser une fonction du type :

$$FOb = pp \sum \left( DP - DP^\star \right)^2 + ps \sum \left( DS - DS^\star \right)^2$$

où $pp$ est un poids associé aux données de production et $ps$ un poids associé aux données sismiques.

Pour réduire la valeur de cette fonction objectif (FOb), on modifie au moins un des ensembles de paramètres X1, X2, X3 et X4. Ces variations sont notées : $\Delta$X1, $\Delta$X2, $\Delta$X3, $\Delta$X4.

Ainsi, à l'issue de cette étape, on dispose d'un modèle géologique décrit en propriétés pétrophysiques (porosité, perméabilité, ...) respectant les données dynamiques (DP et DS).

**4- Exploitation du gisement selon un schéma d'exploitation adapté** (EX - SE)

A partir de ce modèle géologique, calé avec les données dynamiques, les spécialistes définissent un schéma d'exploitation (emplacement des puits producteur, injecteur,...). En effet, à partir de ce modèle géologique, et au moyen d'outils connus des spécialistes (logiciels de simulation d'écoulement par exemple), on définit le mode de fonctionnement de la zone souterraine étudiée. Par exemple, la simulation des écoulements dans un milieu poreux représenté par ce modèle géologique, permet entre autre, de prédire la production du réservoir et ainsi d'optimiser son exploitation en testant différents scénarios.

En définissant différents scénarios de production, puis en testant chaque scénario au moyen d'un simulateur d'écoulement et du modèle géologique, on détermine le scenario optimal en comparant, par exemple, le volume d'huile récupéré. Le scénario optimal étant, dans ce cas, celui susceptible de fournir le maximum de récupération.

On exploite alors le gisement selon ce schéma d'exploitation.

**Exemple d'application**

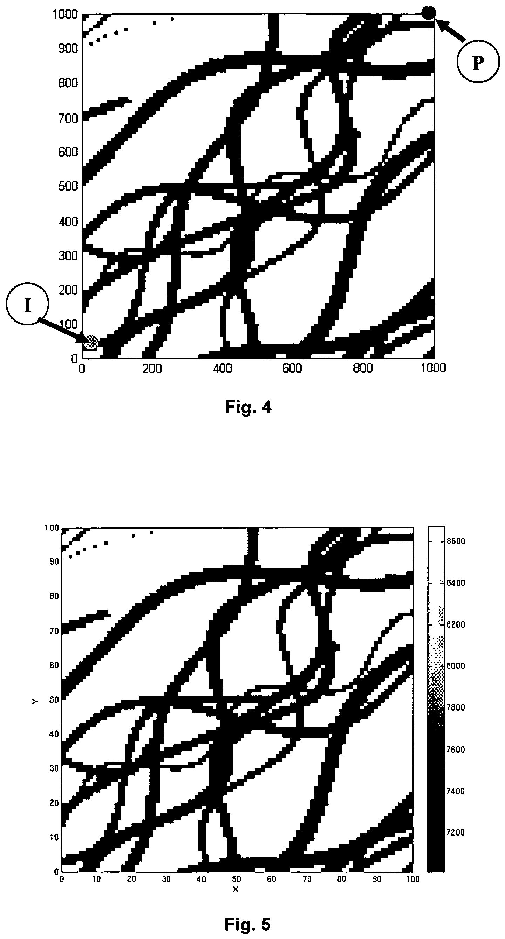

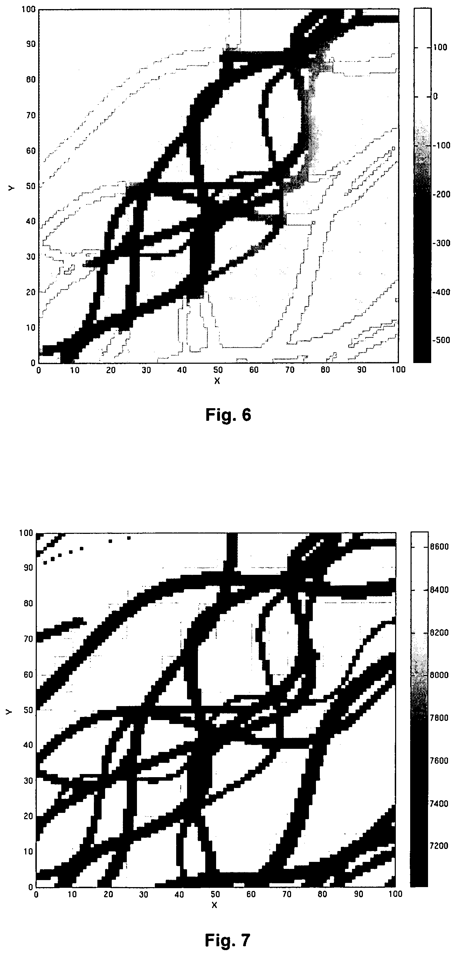

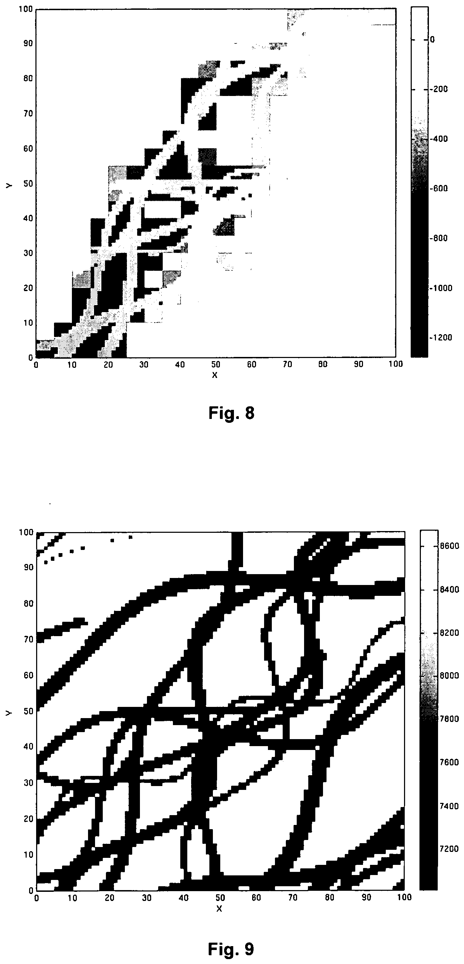

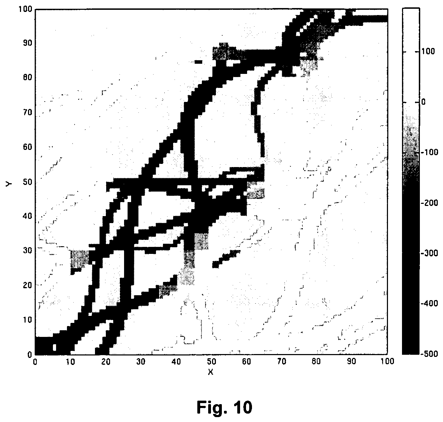

Pour illustrer la méthode, on considère un réservoir 2D composé de deux lithofaciès différents, un sable et un argile. La carte en lithofaciès est illustrée sur la figure 4 où les chenaux de sable sont représentés en noir et l'argile en blanc. Ici l'argile est poreuse mais sa perméabilité absolue est nulle. Les courbes de perméabilités relatives sont identiques pour les deux lithofaciès, à la saturation d'eau résiduelle près, qui est plus importante dans l'argile que dans le sable. Dans ces chenaux, un puits injecteur de gaz (I) a été foré en bas à gauche et un producteur en haut à droite (P). Le maillage géologique a pour dimensions $N_x$=100 et $N_y$=100. Le maillage utilisé pour la simulation d'écoulement a été grossi d'un facteur 5 dans les deux directions de l'espace. Les figures 5 et 6 montrent les impédances de type P (ondes de compression) avant le démarrage de l'exploitation et les différences au bout de 3000 jours. Ces valeurs ont été calculées en effectuant la simulation d'écoulement sur la grille géologique (donc sans upscaling ni downscaling). Sur la figure 6, on peut observer les chutes d'impédances dues à la migration du gaz dans les chenaux. Dans les régions sableuses non balayées par le gaz, on constate une augmentation des impédances liées à la diminution de la pression suite à la production. A l'extérieur, dans l'argile, les impédances conservent leurs valeurs initiales. Les figures 7 et 8 montrent les résultats que l'on obtient lorsque l'on effectue un upscaling des propriétés pétrophysiques et un downscaling des cartes de pressions et de saturations en attribuant simplement les valeurs d'une maille de la grille d'écoulement aux mailles fines sous-jacentes. Comme souligné précédemment, ce type de downscaling est peu précis car il ne tient pas compte, dans ce cas, de la présence d'argile dans certaines mailles fines. On observe ainsi des chutes d'impédances dans les mailles argileuses alors que le gaz ne peut y circuler. Les figures 9 et 10 montrent les résultats que l'on obtient en utilisant les deux algorithmes de downscaling utilisés dans l'invention. Ces algorithmes calculent des variations de pressions et de saturations uniquement dans les chenaux et aboutissent à des réponses sismiques plus proches de celles que l'on obtient en travaillant directement sur le modèle fin (comparer avec les figures 5, 6, 7, 8).

Considérons une fonction objectif de la forme

$$OF = \frac{1}{2}\sum_{i=1}^{M}\omega_i\sum_{j=1}^{N_i}\left|d_{i,j} - \tilde{d}_{i,j}\right|^2$$

où :

- $M$ désigne le nombre de données dynamiques utilisées pour le calage,
- $N_i$ le nombre de mesures (temps pour une donnée de puits, points pour une donnée de grille) pour une donnée $i$,
- $d_{i,j}$ la donnée $i$ simulée en un point $j$,
- $\tilde{d}_{i,i}$ la mesure associée à la donnée $i$ en un point $j$,
- $\omega_i = \dfrac{\alpha_i}{N_i\sigma_i^2}$, $\sigma_i^2$ étant l'intervalle de confiance associé à la donnée $i$, $\alpha_i$ un poids associé à l'ensemble de la donnée.

Pour quantifier la réduction de l'erreur obtenue en utilisant le procédé selon l'invention, on utilise la fonction objectif définie précédemment et les impédances calculées sur la grille fine comme données de référence (voir figures 5 et 6). Avec $\alpha_i$ = 1, $\sigma_i$ = 811.158 g.cm$^{-3}$.m.s$^{-1}$ pour les impédances initiales, $\sigma_i$ = 2.881 g.cm$^{-3}$.m.s$^{-1}$ pour les différences à 3000 jours, la fonction objectif est égale

- à 2729 en plaquant directement les résultats de la simulation d'écoulement sur la grille fine,
- à 430 en utilisant l'invention.

## Revendications

1. Procédé pour optimiser l'exploitation d'un milieu souterrain contenant des fluides, à partir d'un modèle d'écoulement (ME) constitué d'une première grille (GG) formant un ensemble de mailles discrétisant ledit milieu, dans lequel on acquiert en cours d'exploitation dudit milieu des données de production (DP) et des données sismiques (DS) associées à une seconde grille (GF), chaque maille de la première grille (GG) contenant un ensemble de mailles de la seconde grille (GF), **caractérisé en ce que** l'on réalise les étapes suivantes :

   - on simule des données de production, ainsi que des valeurs de pression et de saturation en chaque maille de ladite première grille (GG), au moyen d'un simulateur d'écoulement ;
   - on attribue une valeur de pression en chaque maille de ladite seconde grille (GF) ;
   - on attribue une valeur de saturation en chaque maille de ladite seconde grille en réalisant les étapes suivantes pour chaque maille de ladite première grille (GG) :

◦ on identifie des zones (Rn) constituées d'un ensemble de mailles connexes de ladite seconde grille (GF) ayant une même valeur de lithofaciès ;
◦ on détermine pour chaque zone identifiée une valeur de saturation en résolvant un système composé d'un premier système d'équations (S1) traduisant une continuité des flux des fluides entre zones identifiées voisines, et un second système d'équations (S2) traduisant une conservation d'un volume poreux dans chaque zone identifiée et une conservation d'un volume de chaque fluide dans ladite maille de ladite première grille (GG) ;

- on simule des données sismiques sur ladite seconde grille (GF) au moyen des valeurs de pression et saturation associées à chacune des mailles de ladite seconde grille ;
- on modifie le modèle d'écoulement de façon à minimiser une différence entre les données de production mesurées et les données de production simulées, et de façon à minimiser une différence entre les données sismiques mesurées et les données sismiques simulées, ladite modification dudit modèle d'écoulement consistant à modifier des valeurs de propriétés pétrophysiques associées en chaque maille de ladite seconde grille;
- On optimise l'exploitation dudit milieu souterrain en définissant différents schémas d'exploitation dudit milieu souterrain, en prédisant la production dudit milieu au moyen dudit modèle d'écoulement modifié et dudit simulateur d'écoulement pour chacun desdits schémas, et en déterminant un schéma d'exploitation optimal dudit milieu souterrain, ledit schéma d'exploitation optimal permettant de maximiser ladite production, et on exploite ledit milieu souterrain selon ledit schéma optimal.

2. Procédé selon l'une des revendications précédentes, dans lequel le premier système d'équations ne fait intervenir que des perméabilités relatives des fluides dans chacune des zones identifiées ($R_n$).

3. Procédé selon la revendication 2, dans lequel le premier système d'équations s'obtient en écrivant l'équation suivante pour chaque zone connexe n :

$$\frac{kr_{\alpha1,Rn}\left(S_{\alpha1,Rn}\right)}{kr_{\alpha1,Rn}\left(S_{\alpha1,Rn}\right)+kr_{\alpha2,Rn}\left(S_{\alpha2,Rn}\right)} = \frac{kr_{\alpha1,Rn+1}\left(S_{\alpha1,Rn+1}\right)}{kr_{\alpha1,Rn+1}\left(S_{\alpha1,Rn+1}\right)+kr_{\alpha2,Rn+1}\left(S_{\alpha2,Rn+1}\right)}$$

Avec :

$kr_{\alpha,Rn}$ : perméabilité relative de la phase fluide $\alpha$
$S_{\alpha,Rn}$ saturation de la phase fluide $\alpha$ dans une zone identifiée $R_n$

4. Procédé selon l'une des revendications précédentes, dans lequel le second système d'équations s'écrit :

$$\begin{cases} \left(S_{\alpha1,R1}\sum_{i\subset I,i\subset R1}Vol_i.\phi_{f,i}\right)+...+\left(S_{\alpha1,Rn}\sum_{i\subset I,i\subset Rn}Vol_i.\phi_{f,i}\right)=S_{\alpha1,I}.Vol_I.\phi_{c,I} \\ ... \\ \left(S_{\alpha p,R1}\sum_{i\subset I,i\subset R1}Vol_i.\phi_{f,i}\right)+...+\left(S_{\alpha p,Rn}\sum_{i\subset I,i\subset Rn}Vol_i.\phi_{f,i}\right)=S_{\alpha p,I}.Vol_I.\phi_{c,I} \\ \sum_p S_{\alpha p,R1}=1 \\ ... \\ \sum_p S_{\alpha p,Rn}=1 \end{cases}$$

avec :

$\alpha1, ...\alpha p$ : fluides 1 à p

R1, ...Rn : zones identifiées 1 à n

$i$ : maille de ladite seconde grille incluse dans une maille $I$ de ladite première grille

$Vol_i$ : volume d'une maille i de ladite seconde grille

$Vol_I$ : volume d'une maille I de ladite première grille

$\Phi_{f,i}$ : porosité d'une maille i de ladite seconde grille

$\Phi_{c,I}$ : porosité d'une maille I de ladite première grille

$S_{\alpha,R}$ saturation de la fluide $\alpha$ dans une zone identifiée R

$S_{\alpha,I}$ saturation de la fluide $\alpha$ dans la maille I, calculée par ladite simulation d'écoulement.

5. Procédé selon l'une des revendications précédentes, dans lequel on attribue une valeur de pression en chaque maille de ladite seconde grille en réalisant les étapes suivantes :

- on partitionne ladite première grille en un ensemble de sous-domaines connexes ;
- on résout, pour chacun des sous-domaines, une équation de conservation du volume total des fluides dans les mailles de ladite seconde grille incluse dans le sous-domaine.

6. Procédé selon la revendication 5, dans lequel l'équation de conservation s'écrit :

$$div\big(K_f\big(n_w + n_o + n_g\big)_{f,c}\,\nabla P\big)= 0$$

sur $\Omega_{loc}$

$$P = P_{B_{loc}}$$

sur $B_{loc}$ Avec :

- $K_f$ : perméabilité définie sur la seconde grille
- $\eta_{\alpha,f,c}$ : mobilité d'un fluide $\alpha$
- $P_{B_{loc}}$ : pression sur une frontière $B_{loc}$ du sous-domaine $\Omega_{loc.}$.

7. Procédé selon l'une des revendications précédentes, dans lequel :

- si la porosité d'une maille de ladite seconde grille est inférieure à un premier seuil fixé, on n'attribue aucune valeur de pression à ladite maille, et des flux avec des mailles voisines sont considérés comme nuls ;
- si la perméabilité d'une maille de ladite seconde grille est inférieure à un second seuil fixé, on attribue à ladite maille une valeur de pression égale à une pression avant l'exploitation du milieu, et des flux avec des mailles voisines sont considérés comme nuls.

8. Procédé selon l'une des revendications précédentes, dans lequel :

- si la porosité d'une zone identifiée est inférieure à un premier seuil fixé, on n'attribue aucune valeur de saturation à ladite zone.
- si la perméabilité d'une zone identifiée est inférieure à un second seuil fixé, on attribue à ladite zone une valeur de saturation égale à une saturation avant l'exploitation du milieu.

**Patentansprüche**

1. Verfahren zur Optimierung der Ausbeutung einer unterirdischen Umgebung, welche Fluide enthält, anhand eines Strömungsmodells (ME), das aus einem ersten Raster (GG) besteht, das eine Menge von Maschen bildet, welche die Umgebung diskretisieren, wobei im Verlaufe der Ausbeutung der Umgebung Produktionsdaten (DP) und seismische Daten (DS) erfasst werden, die einem zweiten Raster (GF) zugeordnet sind, wobei jede Masche des ersten Rasters (GG) eine Menge von Maschen des zweiten Rasters (GF) enthält, **dadurch gekennzeichnet, dass** die folgenden Schritte ausgeführt werden:

- Es werden Produktionsdaten sowie Druck- und Sättigungswerte in jeder Masche des ersten Rasters (GG) mittels eines Strömungssimulators simuliert;
- in jeder Masche des zweiten Rasters (GF) wird ein Druckwert zugewiesen;
- in jeder Masche des zweiten Rasters wird ein Sättigungswert zugewiesen, indem die folgenden Schritte für jede Masche des ersten Rasters (GG) ausgeführt werden:

  ◦ Es werden Bereiche (Rn) identifiziert, die aus einer Menge von zusammenhängenden Maschen des zweiten Rasters (GF) bestehen, die denselben Wert von Lithofazies aufweisen;
  ◦ es wird für jeden identifizierten Bereich ein Sättigungswert bestimmt, indem ein System gelöst wird, bestehend aus einem ersten Gleichungssystem (S1), das eine Kontinuität der Ströme der Fluide zwischen benachbarten identifizierten Bereichen ausdrückt, und einem zweiten Gleichungssystem (S2), das eine Erhaltung eines Porenvolumens in jedem identifizierten Bereich und eine Erhaltung eines Volumens jedes Fluids in der Masche des ersten Rasters (GG) ausdrückt;

- es werden seismische Daten auf dem zweiten Raster (GF) mittels der Druck- und Sättigungswerte simuliert, die den einzelnen Maschen des zweiten Rasters zugeordnet sind;
- das Strömungsmodell wird so geändert, dass eine Differenz zwischen den gemessenen Produktionsdaten und den simulierten Produktionsdaten minimiert wird, und so, dass eine Differenz zwischen den gemessenen seismischen Daten und den simulierten seismischen Daten minimiert wird, wobei die Änderung des Strömungsmodells darin besteht, Werte von petrophysikalischen Eigenschaften zu ändern, die den einzelnen Maschen des zweiten Rasters zugeordnet sind;
- die Ausbeutung der unterirdischen Umgebung wird optimiert, indem verschiedene Schemata der Ausbeutung der unterirdischen Umgebung definiert werden, indem die Produktion der Umgebung mittels des geänderten Strömungsmodells und des Strömungssimulators für jedes dieser Schemata vorhergesagt wird und indem ein optimales Schema der Ausbeutung der unterirdischen Umgebung bestimmt wird, wobei dieses optimale Ausbeutungsschema ermöglicht, die Produktion zu maximieren, und die unterirdische Umgebung wird gemäß dem optimalen Schema ausgebeutet.

2. Verfahren nach einem der vorhergehenden Ansprüche, wobei im ersten Gleichungssystem nur relative Durchlässigkeiten für die Fluide in jedem der identifizieren Bereiche ($R_n$) vorkommen.

3. Verfahren nach Anspruch 2, wobei das erste Gleichungssystem erhalten wird, indem die folgende Gleichung für jeden zusammenhängenden Bereich n geschrieben wird:

$$\frac{kr_{\propto 1,Rn}(S_{\propto 1,Rn})}{kr_{\propto 1,Rn}(S_{\propto 1,Rn}) + kr_{\propto 2,Rn}(S_{\propto 2,Rn})} = \frac{kr_{\propto 1,Rn+1}(S_{\propto 1,Rn+1})}{kr_{\propto 1,Rn+1}(S_{\propto 1,Rn+1}) + kr_{\propto 2,Rn+1}(S_{\propto 2,Rn+1})}$$

wobei:

$kr_{\alpha,Rn}$ : relative Durchlässigkeit der fluiden Phase $\alpha$,
$S_{\alpha,Rn}$ : Sättigung der fluiden Phase $\alpha$ in einem identifizierten Bereich $R_n$

4. Verfahren nach einem der vorhergehenden Ansprüche, wobei das zweite Gleichungssystem lautet:

$$\begin{cases} \left( S_{\alpha 1, R1} \sum_{i \subset I, i \subset R1} Vol_i . \phi_{f,i} \right) + ... + \left( S_{\alpha 1, Rn} \sum_{i \subset I, i \subset Rn} Vol_i . \phi_{f,i} \right) = S_{\alpha 1, I} . Vol_I . \phi_{c,I} \\ ... \\ \left( S_{\alpha p, R1} \sum_{i \subset I, i \subset R1} Vol_i . \phi_{f,i} \right) + ... + \left( S_{\alpha p, Rn} \sum_{i \subset I, i \subset Rn} Vol_i . \phi_{f,i} \right) = S_{\alpha p, I} . Vol_I . \phi_{c,I} \\ \sum_p S_{\alpha p, R1} = 1 \\ ... \\ \sum_p S_{\alpha p, Rn} = 1 \end{cases}$$

wobei:

$\alpha 1, ..., \alpha p$: Fluide 1 bis p
R1, ..., Rn: identifizierte Bereiche 1 bis n
$i$ : Masche des zweiten Rasters, die in einer Masche $I$ des ersten Rasters enthalten ist
$Vol_i$ : Volumen einer Masche i des zweiten Rasters
$Vol_I$ Volumen einer Masche I des ersten Rasters
$\Phi_{f,i}$ : Porosität einer Masche i des zweiten Rasters
$\Phi_{c,I}$ : Porosität einer Masche I des ersten Rasters
$S_{\alpha,R}$ : Sättigung des Fluids $\alpha$ in einem identifizierten Bereich R
$S_{\alpha,I}$ : Sättigung des Fluids $\alpha$ in der Masche I, welche durch die Strömungssimulation berechnet wurde

5. Verfahren nach einem der vorhergehenden Ansprüche, wobei ein Druckwert in jeder Masche des zweiten Rasters zugewiesen wird, indem die folgenden Schritte ausgeführt werden:

- Das erste Raster wird in eine Menge von zusammenhängenden Unterbereichen aufgeteilt;
- für jeden der Unterbereiche wird eine Gleichung der Erhaltung des Gesamtvolumens der Fluide in den Maschen des zweiten Rasters, das in dem Unterbereich enthalten ist, gelöst.

6. Verfahren nach Anspruch 5, wobei die Erhaltungsgleichung lautet:

$$div \left( K_f (n_w + n_o + n_g)_{f,c} \nabla P \right) = 0$$

auf $\Omega_{loc}$

$$P = P_{B_{loc}}$$

auf $B_{loc}$ wobei:

- $K_f$ : auf dem zweiten Raster definierte Durchlässigkeit
- $\eta_{\alpha,f,c}$ : Beweglichkeit eines Fluids $\alpha$
- $P_{B_{loc}}$ : Druck an einer Grenze $B_{loc}$ des Unterbereichs $\Omega_{loc}$

7. Verfahren nach einem der vorhergehenden Ansprüche, wobei:

- falls die Porosität einer Masche des zweiten Rasters kleiner als ein festgelegter erster Schwellenwert ist, dieser Masche kein Druckwert zugewiesen wird und Flüsse mit benachbarten Maschen als null betrachtet werden;

- falls die Durchlässigkeit einer Masche des zweiten Rasters kleiner als ein festgelegter zweiter Schwellenwert ist, dieser Masche ein Druckwert zugewiesen wird, der gleich einem Druck vor der Ausbeutung der Umgebung ist, und Flüsse mit benachbarten Maschen als null betrachtet werden.

8. Verfahren nach einem der vorhergehenden Ansprüche, wobei:

- falls die Porosität eines identifizierten Bereichs kleiner als ein festgelegter erster Schwellenwert ist, diesem Bereich kein Sättigungswert zugewiesen wird,
- falls die Durchlässigkeit eines identifizierten Bereichs kleiner als ein festgelegter zweiter Schwellenwert ist, diesem Bereich ein Sättigungswert zugewiesen wird, der gleich einer Sättigung vor der Ausbeutung der Umgebung ist.

**Claims**

1. Method for optimizing the exploitation of an underground medium containing fluids, on the basis of a flow model (ME) consisting of a first grid (GG) forming a set of cells discretizing said medium, wherein, during exploitation of said medium, production data (DP) and seismic data (DS) associated with a second grid (GF) are acquired, each cell of the first grid (GG) containing a set of cells of the second grid (GF), **characterized in that** the following steps are carried out:

- production data, and pressure and saturation values in each cell of said first grid (GG), are simulated by means of a flow simulator;
- a pressure value is attributed to each cell of said second grid (GF);
- a saturation value is attributed to each cell of said second grid by carrying out the following steps for each cell of said first grid (GG):

  ∘ regions (Rn) consisting of a set of adjoining cells of said second grid (GF) having one same lithofacies value are identified;
  ∘ for each identified region, a saturation value is determined by solving a system composed of a first system of equations (S1) expressing a continuity in the flows of the fluids between neighbouring identified regions, and a second system of equations (S2) expressing a conservation of a porous volume in each identified region and a conservation of a volume of each fluid in said cell of said first grid (GG);

- seismic data are simulated on said second grid (GF) by means of the pressure and saturation values associated with each of the cells of said second grid;
- the flow model is modified so as to minimize a difference between the measured production data and the simulated production data, and so as to minimize a difference between the measured seismic data and the simulated seismic data, said modification of said flow model consisting in modifying values of associated petrophysical properties in each cell of said second grid;
- the exploitation of said underground medium is optimized by defining various schemes of exploitation of said underground medium, by predicting the production of said medium by means of said modified flow model and of said flow simulator for each of said schemes, and by determining an optimal scheme of exploitation of said underground medium, said optimal scheme of exploitation allowing said production to be maximized, and said underground medium is exploited using said optimal scheme.

2. Method according to one of the preceding claims, wherein the first system of equations involves only relative permeabilities of the fluids in each of the identified regions ($R_n$).

3. Method according to Claim 2, wherein the first system of equations is obtained by writing the following equation for each adjoining region n:

$$\frac{kr_{\alpha1,Rn}(S_{\alpha1,Rn})}{kr_{\alpha1,Rn}(S_{\alpha1,Rn}) + kr_{\alpha2,Rn}(S_{\alpha2,Rn})} = \frac{kr_{\alpha1,Rn+1}(S_{\alpha1,Rn+1})}{kr_{\alpha1,Rn+1}(S_{\alpha1,Rn+1}) + kr_{\alpha2,Rn+1}(S_{\alpha2,Rn+1})}$$

with

$kr_{\alpha,Rn}$: the relative permeability of fluid phase $\alpha$

$S_{\alpha,Rn}$: the saturation of the fluid phase $\alpha$ in an identified region $R_n$.

4. Method according to one of the preceding claims, wherein the second system of equations is written:

$$
\begin{cases}
\left( S_{\alpha 1,R1} \sum_{i \subset I, i \subset R1} Vol_i \cdot \phi_{f,i} \right) + \cdots + \left( S_{\alpha 1,Rn} \sum_{i \subset I, i \subset Rn} Vol_i \cdot \phi_{f,i} \right) = S_{\alpha 1,I} Vol_I \cdot \phi_{c,I} \\
\cdots \\
\left( S_{\alpha p,R1} \sum_{i \subset I, i \subset R1} Vol_i \cdot \phi_{f,i} \right) + \cdots + \left( S_{\alpha p,Rn} \sum_{i \subset I, i \subset Rn} Vol_i \cdot \phi_{f,i} \right) = S_{\alpha p,I} Vol_I \cdot \phi_{c,I} \\
\sum_p S_{\alpha p,R1} = 1 \\
\cdots \\
\sum_p S_{\alpha p,Rn} = 1
\end{cases}
$$

with:

$\alpha 1, \ldots \alpha p$: fluids 1 to p

$R1, \ldots Rn$: identified regions 1 to n

$i$: cell of said second grid included in a cell $I$ of said first grid

$Vol_i$: volume of a cell i of said second grid

$Vol_I$: volume of a cell I of said first grid

$\phi_{f,i}$: porosity of a cell i of said second grid

$\phi_{c,I}$: porosity of a cell I of said first grid

$S_{\alpha,R}$: saturation of the fluid $\alpha$ in an identified region R

$S_{\alpha,I}$: saturation of the fluid $\alpha$ in the cell I, computed using said flow simulation.

5. Method according to one of the preceding claims, wherein a pressure value is attributed to each cell of said second grid by carrying out the following steps:

- said first grid is partitioned into a set of adjoining sub-domains;
- for each of the sub-domains, an equation of conservation of the total volume of the fluids in the cells of said second grid included in the subdomain is solved.

6. Method according to Claim 5, wherein the conservation equation is written:

$$
div \left( K_f (n_w + n_o + n_g)_{f,c} \nabla P \right) = 0
$$

in $\Omega_{loc}$

$$
P = P_{B_{loc}}
$$

at $B_{loc}$ with:

- $K_f$: permeability defined on the second grid
- $\eta_{\alpha,f,c}$: mobility of a fluid $\alpha$
- $P_{B_{loc}}$: pressure at a boundary $B_{loc}$ of the subdomain $\Omega_{loc}$.

7. Method according to one of the preceding claims, wherein:

- if the porosity of a cell of said second grid is lower than a first set threshold, no pressure value is attributed to said cell, and flows with neighbouring cells are considered to be zero;
- if the permeability of a cell of said second grid is lower than a second set threshold, a pressure value equal to a pressure before exploitation of the medium is attributed to said cell, and flows with neighbouring cells are considered to be zero.

8. Method according to one of the preceding claims, wherein:

- if the porosity of an identified region is lower than a first set threshold, no saturation value is attributed to said region;
- if the permeability of an identified region is lower than a second set threshold, a saturation value equal to a saturation before exploitation of the medium is attributed to said region.

**Fig. 1**

**Fig. 2**

**Fig. 3**

**Fig. 4**

**Fig. 5**

**Fig. 6**

**Fig. 7**

24

**Fig. 8**

**Fig. 9**

**Fig. 10**

## RÉFÉRENCES CITÉES DANS LA DESCRIPTION

**Documents brevets cités dans la description**

- EP 1728967 A1

**Littérature non-brevet citée dans la description**

- **S. A. CASTRO.** A Probabilistic Approach To Jointly Integrate 3D/4D Seismic, Production Data and Geological Information for Building Reservoir Models. *PhD thesis, Stanford University,* 2007
- **M. SENGUPTA.** Integrating rock physics and flow simulation to reduce uncertainties in seismic reservoir monitoring. *PhD thesis, Stanford University,* 2000
- **ENCHERY G. et al.** An improved pressure and saturation downscaling process for a better intégration of 4D seismic data together with production history. *SPE,* 11 Juin 2007, vol. SPE (107088
- **ROGGERO F. et al.** tching of production history and 4D seismic data - application to the Girassol Field, Offshore Angola. *SPE INTERNATIONAL OIL AND GAS CONFERENCE AND EXHIBITION,* 11 Novembre 2007
- **L.-Y. HU.** Graduai déformation and iterative calibration of Gaussian-related Stochastic Models. *Mathematical Geology,* 2000, vol. 32, 87-108
- **M. LE RAVALEC-DUPIN ; B. NOETINGER.** Optimization with the Graduai Déformation Method. *Mathematical Geology,* 01 Février 2002, vol. 34 (2), 125-142
- **MATHERON G. ; BEUCHER H. ; DE FOUQUET C. ; GALLI A. ; GUERILLOT D. ; RAVENNE C.** Conditional simulation of the geometry of fluvio deltaic reservoirs. *SPE 62nd Annual Conference,* 1987, 591-599
- **L.J. DURLOFSKY.** Upscaling of Geocellular Models for Reservoir Flow Simulation: A Review of Recent Progress. *Paper presented at 7th International Forum on Reservoir Simulation, Bühl/Baden-Baden,* 23 Juin 2003
- **PH. RENARD ; G. DE MARSILY.** Calculating equivalent permeability: a review. *Advances in Water Resources,* 1997, vol. 20 (5-6), 253-278
- **J. W. BARKER ; S. THIBEAU.** A Critical Review of the Use of Pseudorelative Permeabilities for Upscaling. *Paper (SPE 35491) first presented at the 1996 European 3D Reservoir Modelling Conference,* 1997
- **Y. GAUTIER ; M. J. BLUNT ; M. A. CHRISTIE.** Nested gridding and streamline-based simulation reservoir performance prédiction. *Computational Geosciences,* 1999, vol. 3, 295-320
- **L. SHAPIRO ; G. STOCKMAN.** Computer Vision. Prentice Hall, 2002, 69-73
- **X-H. WANG ; M. QUINTARD ; G. DARCHE.** Adaptive Mesh Refinement for One-dimensional Three-phase Flow with Phase Change in Porous Media. *Numerical Heat Transfer,* 2006, vol. 50, 231-268